# EUROPÄISCHE PATENTANMELDUNG

(11) **EP 4 592 768 A1**
(43) Veröffentlichungstag der Anmeldung: **30.07.2025**
(21) Anmeldenummer: 25150300.9
(22) Anmeldetag: 06.01.2025
(51) Int. Cl.: G05B 9/02

(54) **STEUERGERÄT FÜR GEBÄUDEAUTOMATION**

(30) Priorität: 23.01.2024 DE 102024101910
(71) Anmelder: WAREMA Renkhoff SE, 97828 Markheidenfeld (DE)
(72) Erfinder: DÜMIG, Rüdiger, 97840 Hafenlohr (DE); MÖHRES, Sebastian, 97776 Eußenheim (DE)
(74) Vertreter: Boult Wade Tennant LLP

(57) **Zusammenfassung**

Ein Steuergerät (6) ist für die Gebäudeautomation bestimmt und besitzt wenigstens zwei Anschlusspole (3, 4; 26, 27) zur Verbindung mit einer elektrischen Komponente (1). Um insbesondere die nachträgliche Ausrüstung für den Blitzschutz zu vereinfachen, ist vorgesehen, dass das Steuergerät (6) einen Erdungsanschluss (15) und wenigstens einen Steckplatz (24, 25; 28, 29) mit Steckverbindungen (18, 20) aufweist, die den Anschlusspolen (3, 4; 26, 27) parallelgeschaltet ist, und in welchen eine Überspannungsschutzvorrichtung (21, 22) zur Absicherung der wenigstens zwei Anschlusspole (3, 4; 26, 27) zum Erdungsanschluss (15) hin einsteckbar ist.

## Beschreibung

Die Erfindung betrifft gemäß dem Oberbegriff von Anspruch 1 ein Steuergerät für Gebäudeautomation mit wenigstens zwei Anschlusspolen zur Verbindung mit einer elektrischen Komponente.

In der Gebäudeautomation werden unterschiedliche Steuergeräte eingesetzt, um diverse elektrische Komponenten eines Gebäudes steuern oder Sensorsignale zur Steuerung andere Komponenten auswerten zu können. Ein Teil dieser elektrischen Komponenten kann außerhalb einer schützenden Gebäudehülle liegen, so dass elektrische Verbindungsleitungen durch die Gebäudehülle verlegt werden müssen, wie z.B. bei der Einbindung einer Wetterstation als elektrische Komponente, deren Sensordaten z.B. zur Steuerung von Sonnenschutzanlagen genutzt werden, deren Antriebsmotoren z.B. bei einer Markise ebenfalls außerhalb der Gebäudehülle liegen können und über entsprechende, die Gebäudehülle durchdringenden Anschlussleitungen verfügen. Als weitere Beispiele für außerhalb der Gebäudehülle liegenden elektrische Komponenten können Beleuchtungseinrichtungen oder Gegensprechanlagen genannt werden.

Um den Anforderungen an einen Blitzschutz gerecht zu werden, der vermeidet, dass durch indirekten Blitzeinschlag in den Außenleitungen induzierte Spannungsspitzen die Steuergeräte und evtl. auch mit diesen in Verbindung stehenden weitere Geräte einer Gebäudeautomation beschädigen können, ist es erforderlich, die durch die Gebäudehülle geführten Leitungen mit einem Überspannungsschutz abzusichern.

Bei Einsatz z.B. einer Wetterstation besteht diese zuvor genannte Notwendigkeit. Bisher wird dies durch den Einsatz von Überspannungsschutzvorrichtungen, die auch als Blitzschutzduktoren bezeichnet werden, realisiert, die jedoch in einem eigenen Gehäuse verbaut werden müssen, die i.d.R. wie kleine elektrische Verteiler verschaltet sind. Dies führt zu einem erhöhten Montage- und Verdrahtungsaufwand, bei welchem auch ein spezielles Knowhow zur Auswahl des geeigneten Überspannungsschutzes erforderlich ist. So ist es nicht selten, dass ein Installateur die Installation nicht fachgerecht oder gar nicht ausführt, obwohl dies nach Norm ausdrücklich erforderlich ist.

Die Aufgabe der vorliegenden Erfindung besteht darin, ein Steuergerät zu schaffen, das bei einer Anbindung einer außerhalb der Gebäudehülle liegenden elektrischen Komponente die Anordnung einer Überspannungsschutzvorrichtung als Blitzschutz vereinfacht.

Erfindungsgemäß wird die Aufgabe durch ein Steuergerät der eingangs genannten Art gelöst, bei welchem das Steuergerät einen Erdungsanschluss und wenigstens einen Steckplatz mit Steckverbindungen aufweist, die den Anschlusspolen parallelgeschaltet sind, und in welchen eine Überspannungsschutzvorrichtung zum Schutz der wenigstens zwei Anschlusspole zum Erdungsanschluss hin einsteckbar ist.

Die erfindungsgemäße Lösung bietet den Vorteil, dass zunächst die Versorgungs- und/oder Datenleitungen einer außerhalb der Gebäudehülle angeordneten elektrischen Komponente in üblicher Weise direkt durch die Gebäudehülle verlegt und an die Anschlusspole des Steuergerätes angeschlossen werden können. Eine Nachbearbeitung, insbesondere ein Auftrennen und Abisolieren der Kabel mit einem Verklemmen an den zusätzlichen Komponenten ist nicht erforderlich. Der Zeitaufwand und Materialbedarf ist daher nicht aufwendiger als bei einer Installation ohne Überspannungsschutz. Um den Überspannungschutz zu realisieren, muss dann lediglich eine geeignete Überspanungsschutzvorrichtung in den dafür vorgesehenen Steckplatz an dem Steuergerät eingesetzt werden. Durch die Art des Steckplatzes kann auch vermieden werden, dass eine ungeeignete Überspannungsschutzvorrichtung verwendet wird, weil sich nur eine zur Absicherung des zu schützenden Anschlusses geeignete Vorrichtung in den Steckplatz einstecken lässt.

Ein weiterer Vorteil der erfindungsgemäßen Lösung besteht darin, dass sich nach einem Auslösen der Überspannungsschutzvorrichtung diese einfach austauschen lässt.

Sofern das Steuergerät ausschließlich mit innerhalb der Gebäudehülle angeordneten elektrischen Komponenten verbunden werden soll und ein Schutz vor Überspannung nicht erforderlich ist, können die Steckplätze unbelegt bleiben. Unnötiger Aufwand durch einen nicht benötigten Überspannungsschutz wird entsprechend vermieden.

In einer bevorzugten Ausführungsform der Erfindung ist vorgesehen, dass wenigstens ein Steckplatz eine Steckverbindung für den Erdungsanschluss aufweist. Da die üblichen Überspannungsschutzvorrichtungen in der Regel einen Erdungsanschluss benötigen, kann dieser unmittelbar über die Steckverbindung bereitgestellt werden. Es ist aber auch möglich, nur Steckverbindungen für die abzusichernden Pole vorzusehen und den Erdungsanschluss über eine separate Klemme vorzunehmen. Der Erdungsanschluss ist insbesondere bei Steuergeräten unproblematisch zu realisieren, die über ein Netzteil verfügen, da diese an ein Gebäudestromnetz angeschlossen werden, das als typisches Niederspannungsnetz über einen solchen geerdeten Pol verfügt.

In einer besonders bevorzugten Ausführungsform der Erfindung ist vorgesehen, dass bei mehrpoligen Anschlüssen jeweils wenigstens ein Steckplatz mit einer entsprechenden Anzahl von Steckverbindungen zur Absicherung aller Anschlusspole dieses Anschlusses vorgesehen ist. Auf diese Weise kann jede elektrische Komponente durch Einsatz einer passenden Überspannungsschutzvorrichtung im entsprechenden zugehörigen Steckplatz abgesichert werden.

Eine bevorzugte Weiterbildung hierzu sieht vor, dass für jeden Anschluss einer elektrischen Komponente wenigstens ein Steckplatz für eine Überspannungsschutzvorrichtung mit einer entsprechenden Polzahl vorgesehen ist. Während es möglich ist, z.B. die Versorgungs- und Datenleitungen mit separaten Überspannungsschutzvorrichtungen abzusichern, kann es aus Gründen der Montagesicherheit sinnvolle sein, einen speziellen Überspannungsschutz zur Absicherung aller Pole für eine elektrische Komponente vorzusehen. Sofern die elektrische Komponente über einen Erdungsanschluss verfügt, braucht dieser nicht extra abgesichert zu werden, er kann aber für die Kontaktierung trotzdem mit einer Steckverbindung im Steckplatz kontaktiert werden.

Eine besonders bevorzugte Ausführungsform der Erfindung sieht vor, dass der wenigstens eine Steckplatz für die Überspannungsschutzvorrichtung innerhalb eines abnehmbaren Gehäuses angeordnet ist. Durch diese Anordnung ist sichergestellt, dass die Überspannungsschutzvorrichtung selbst nicht durch äußere Einwirkung beschädigt oder versehentlich abgezogen werden kann.

Wie bereits erwähnt ist wenigstens ein Teil der Anschlusspole zur Verbindung mit Versorgungs- und/oder Datenleitungen für außerhalb einer Gebäudehülle liegenden elektrische Komponenten vorgesehen. Es können aber weitere Anschlüsse ohne zugehörige Steckplätze für einen Überspannungsschutz zum Anschluss von weiteren elektrischen Komponenten vorgesehen sein, die innerhalb der Gebäudehülle geschützt angeordnet sind.

Gegenstand der vorliegenden Erfindung ist auch ein System bestehend aus einem Steuergerät der zuvor beschriebenen Art und wenigstens einer elektrischen Komponente für den Außeneinsatz als Bestandteil einer Gebäudeautomation, bei welchem wenigstens eine Versorgungs- und/oder Datenleitung zwischen der elektrischen Komponente und dem Steuergerät vor-gesehen ist, die durch eine Gebäudehülle verlegt ist, wobei eine oder mehrere Überspannungsschutzvorrichtungen in dem wenigstens einen Steckplatz eingesteckt sind, die alle Anschlusspole der elektrischen Komponente absichern.

Wie bereits angesprochen, besteht eine besonders bevorzugte Ausgestaltung eines solchen Systems darin, dass die elektrische Komponente eine Wetterstation ist, die über eine zwei- oder mehrpolige Versorgungsleitung und eine zwei- oder mehrpolige Datenleitung an das Steuergerät angeschlossen ist, wobei die Absicherung gegen Überspannungen bei Blitzeinschlag dadurch realisiert ist, dass für die Versorgungsleitung und die Datenleitung jeweils ein separater Überspannungsschutz in einem dafür vorgesehenen Steckplatz angeordnet ist. Diese beiden Überspannungsschutzvorrichtungen können aber auch in einer Vorrichtung kombiniert sein, die in einen entsprechend konfigurierten Steckplatz eingesteckt sind.

Sofern bei einer alternative vorgesehenen Ausführungsform der Erfindung vorgesehen ist, dass wenigstens eine Datenleitung durch eine Funkstrecke ersetzt ist, kann ein diesbezüglicher Überspannungsschutz entfallen.

Weitere Merkmale, Einzelheiten und Vorteile der Erfindung ergeben sich aus dem Wortlaut der Ansprüche sowie aus der nachfolgend anhand der Zeichnung beschriebenen Ausführungsbeispiel. Es zeigen:
Fig. 1 ein schematisches Schaubild eines Schaltgerätes eines Gebäudeautomation nach dem Stand der Technik mit einer außerhalb des Gebäudes angeordneten Wetterstation ohne Überspannungsschutz;
Fig. 2 ein schematisches Schaubild des Schaltgerätes nach Fig. 1 mit externen Überspannungsschutzvorrichtungen;
Fig. 3 ein schematisches Schaubild eines erfindungsgemäßen Schaltgerätes ohne Überspannungsschutz;
Fig. 4 ein schematisches Schaubild des Schaltgerätes nach Fig. 3 mit einer eingesteckten Überspannungsschutzvorrichtung.
Fig. 5 ein schematisches Schaubild eines Schaltgerätes mit erhöhter Steckplatzanzahl;
Fig. 6 eine schematische Ansicht eines mehrpoligen Anschlusses eines Steuergerätes und einen zugehörigen Steckplatz für eine Überspannungsschutzvorrichtung.

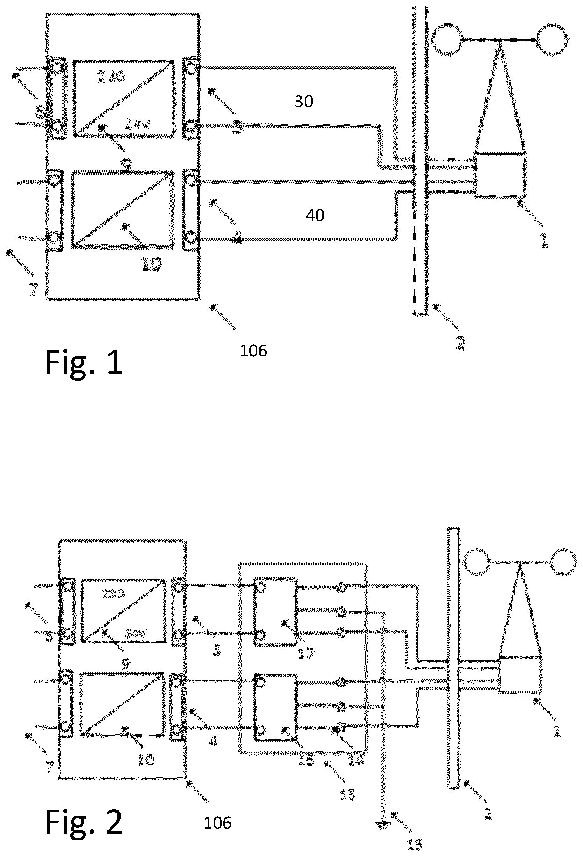

Fig. 1 zeigt ein Steuergerät 106 einer Gebäudeautomation mit einer daran angeschlossenen Wetterstation 1, die über eine Versorgungsleitung 30 und eine Datenleitung 40 mit dem Steuergerät 106 verbunden ist. Im Beispielfall kann die Wetterstation Sensoren z.B. zur Wind- und Niederschlagserfassung aufweisen, deren Messwerte in der dem Steuergerät zur Steuerung von außen und/oder innen angeordneten Sonnenschutzanlagen herangezogen werden.

Die Verbindungsleitungen 30, 40 sind durch eine Gebäudehülle 2 geführt und an Anschlussklemmen 3 für die Versorgungsleitungen, die über ein Netzteil 9 in dem Steuergerät versorgt werden, und Anschlussklemmen 4 für die Datenleitungen, die mit Steuerungskomponenten 10 in dem Steuergerät verbunden sind, an dieses angeschlossen. Ein Versorgungsanschluss 8 dient zum Anschluss an ein Niederspannungsnetz (nicht dargestellt) in dem Gebäude, während für die Datenverbindung mit der gebäudeseitigen Automationstechnik ein Datenanschluss 7 vorgesehen ist.

Die außenliegende Wetterstation 1 ist Gefahren durch Überspannungen ausgesetzt, die üblicherweise durch indirekte Blitzeinschläge in der Nähe entstehen. Hierbei werden Überspannungen in den Leitungen 30, 40 induziert, die durch die Fassade 2 des Gebäudes nicht abgeschirmt werden können. Dadurch gelangen sie bis zu dem Steuergerät 106 und über deren Verbindungen ggf. auch zu weiteren Komponenten der Gebäudeautomation, die alle dem Risiko einer Beschädigung oder Zerstörung ausgesetzt sind. Blitzschutzkonzepte sehen daher vor, dass die Leiter durch Überspannungsschutzvorrichtungen 16, 17 geschützt werden.

Fig. 2 zeigt ein Schaubild eines entsprechend geschützten Systems mit einem Steuergerät 106 und einer Wetterstation 1 nach dem Stand der Technik. Hierbei wird ein zusätzliches Installationsgehäuse 13 mit darin angeordneten Überspannungsschutzvorrichtungen 16, 17 auf der Gebäudeinnenseite zwischen dem, Steuergerät 106 und dem Wetterstation 1 installiert, wobei nach dem Auftrennen der Leitungen 30, 40 eine Vielzahl von Klemmverbindungen 14 zwischen den Anschlussklemmen 3, 4, des Steuergerätes 106, den Klemmen des Installationsgehäuses 13 und den Zuleitungen der Wetterstation 1 hergestellt werden müssen.

Weiterhin muss ein Erdungsanschluss 15 verlegt und angeschlossen werden, damit die Überspannungsschutzvorrichtungen funktionieren können. Bekannte Steuergeräte weisen insbesondere auf der Anschlussseite keinen Anschluss für Schutzerde auf, da die Versorgungsspannung in der Regel auf einem für Menschen völlig unbedenklichen Niveau liegt.

Es sind auch Steuergeräte mit in dessen Anschlussklemmen integriertem Überspannungsschutz bekannt, jedoch haben auch diese feste Zuleitungen, so dass die Zahl der Arbeitsschritte nur unwesentlich reduziert ist und zudem das Steuergeräte selbst aufwendiger wird.

Bei beiden Varianten entsteht durch die Anordnung des Überspannungsschutzes ein erheblicher Mehraufwand and Zeit und Material.

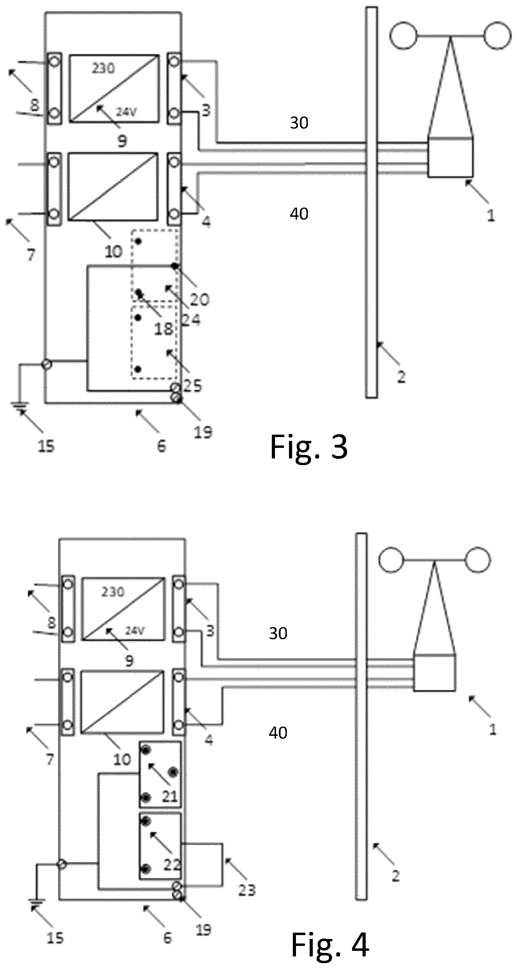

Die in Fig. 3 bis 5 gezeigten erfindungsgemäßen Ausführungsformen eines Steuergeräts 6 besitzen integrierte Steckplätze 24, 25, 28, 29 mit vorbereiteten Steckstiften 18 als Steckverbindungen für die entsprechend konfigurierten Überspannungsschutzvorrichtungen 21, 22. Fig. 3 zeigt das Steuergerät 6 ohne Überspannungsschutzvorrichtungen. Für den reinen Inneneinsatz ohne außenliegende elektrisch Komponenten ist keine weitere Maßnahme erforderlich.

Die Steckverbindungen sind parallel zu den Polen der Versorgungs- 30 und Datenleitungen 40 geschaltet, so dass der für den Anschluss von externen, außerhalb der Gebäude liegenden Komponenten der Überspannungsschutz durch einfaches Einstecken (siehe Fig. 4) erreicht werden kann, ohne dass Kabel aufgetrennt oder weitere Elemente in die Leitungen eingeschleift werden müssen. Die originalen Leitungen 30, 40 können unversehrt beibehalten werden.

Die Abbildungen zeigen beispielhaft zwei Varianten von Steckplätzen 24, 25. Eine erster Steckplatz 24 verfügt über einen eigenen Steckstift 20 für Schutzerde, der mit einem Schutzerdeanschluss 15 des Steuergerätes 6 verbunden ist, z.B. mit dem entsprechenden Leiter eines Gebäudestromnetzes.

Der Steckplatz 25 ist hier so ausgeführt, dass er nur Steckverbindungen 18 für die zu schützenden Pole aufweist. Ein Leiter 23 für Schutzerde wird hier an eine separate Klemme 19 angeschlossen, die mit dem Schutzerdeanschluss 15 des Steuergerätes verbunden ist.

Die Art des Steckplatzes ist durch die zum Einsatz kommende Schutzvorrichtung definiert. So kann die Anordnung der Steckverbindungen variiert werden und es können zusätzliche Elemente vorgesehen sein, die nur das Einstecken jeweils geeigneter Überspannungsschutzvorrichtungen 21, 22 ermöglichen und verhindern, dass ungeeignete Einrichtungen angeschlossen werden.

Die beschriebenen Steckplätze ermöglichen auch ein Nachrüsten, wenn z.B. an ein bereits vorhandenes Steuergerät 6 nachträglich eine Wetterstation, ein sonstiger außenliegender Sensor oder auch ein sonstiges außenliegendes elektrisches Gerät, wie z.B. ein Antrieb für eine Sonnenschutzanlage.angeschlossen werden soll.

Die Steckplätze befinden sich innerhalb eines abnehmbaren Gehäuses, so dass ein unbefugtes oder unbeabsichtigtes Entfernen des Blitzschutzes verhindert wird. Nach einem Auslösen können die verbrauchten Schutzvorrichtungen einfach und kostengünstig ersetzt werden.

Der erste Steckplatz mit integrierter Schutzerde ist hier zur Absicherung der Versorgungsleitung 30 vorgesehen, er kann aber auch zur Absicherung der Datenleitung 40 vorgesehen sein.

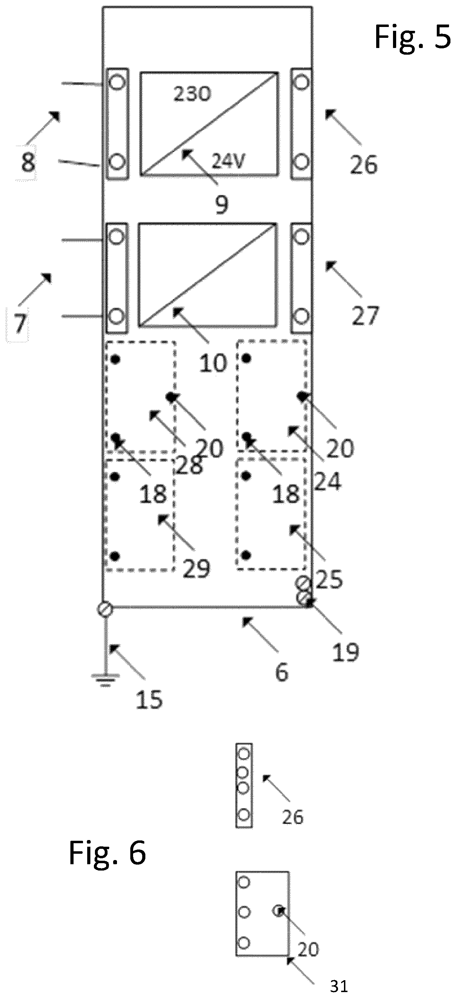

Fig 5. zeigt ein Ausführungsbeispiel eines Steuergerätes 6, bei dem insgesamt vier Steckplätze 24, 25, 28, 29 vorgesehen sind. Diese können zur Absicherung weiterer, nicht gezeigter Anschlüsse vorgesehen sein oder es können auch paarweise Steckplätze für jeweils einen Anschluss vorgesehen sein, um alternativ Schutzvorrichtungen mit integriertem Schutzerdestift 18 oder einem Anschlusskabel 23 für Schutzerde einsetzen zu können.

Wir bereits erwähnt, können die Steckplätze beliebig konfiguriert und z.B. auch an mehrpolige Anschlüsse zum Einsatz entsprechend ausgebildeter Überspannungsschutzvorrichtungen 21, 22 angepasst sein. Ein entsprechender vierpoliger Anschluss 26 ist in Fig. 6 gezeigt, der z.B. für einen Sonnenschutzmotor benötigt wird. Von den vier Polen "hoch", "tief", N und Schutzerde müssen die drei Pole mit Ausnahme von Schutzerde geschützt werden.

Ein beispielhafter Steckplatz 31 für einen solchen vierpoligen Anschluss 26 ist im unteren Teil der Abbildung gezeigt.

Die Erfindung ist nicht auf eine der vorbeschriebenen Ausführungsformen beschränkt, sondern in vielfältiger Weise abwandelbar.

Sämtliche aus den Ansprüchen und der Beschreibung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Wetterstation
- 2: Gebäudehülle
- 3: Versorgungsanschlussklemmen
- 4: Datenanschlussklemmen
- 6: Steuergerät
- 7: Datenanschluss
- 8: Versorgungsanschluss
- 9: Netzteil
- 10: Steuerungskomponenten
- 13: Installationsgehäuse (Stand der Technik)
- 14: Klemmverbindungen (Stand der Technik)
- 15: Schutzerde
- 16: Überspannungsschutzvorrichtung (Stand der Technik)
- 17: Überspannungsschutzvorrichtung (Stand der Technik)
- 18: Steckstifte
- 19: Schutzerdeklemme
- 20: Steckstift Schutzerde
- 21: Überspannungsschutzvorrichtung
- 22: Überspannungsschutzvorrichtung
- 23: Schutzerdeverbindungsleitung
- 24: Steckplatz mit Erdungsstift
- 25: Steckplatz ohne Erdungsstift
- 26: Mehrpoliger Anschluss
- 27: Datenanschluss
- 28: weiterer Steckplatz mit Erdungsstift
- 29: weiterer Steckplatz ohne Erdungstift
- 30: Versorgungsleitung
- 31: vierpoliger Steckplatz
- 40: Datenleitung
- 106: Steuergerät (Stand der Technik)

## Patentansprüche

1. Steuergerät (6) für Gebäudeautomation mit wenigstens zwei Anschlusspolen (3, 4; 26, 27) zur Verbindung mit einer elektrischen Komponente (1), **dadurch gekennzeichnet, dass** das Steuergerät (6) einen Erdungsanschluss (15) und wenigstens einen Steckplatz (24, 25; 28, 29) mit Steckverbindungen (18, 20) aufweist, die den Anschlusspolen 3, 4; 26, 27) parallelgeschaltet sind, und in welchen eine Überspannungsschutzvorrichtung (21, 22) zum Schutz der wenigstens zwei Anschlusspole (3, 4; 26, 27) zum Erdungsanschluss (15) hin einsteckbar ist.

2. Steuergerät nach Anspruch 1, **dadurch gekennzeichnet, dass** wenigstens ein Steckplatz (24) für den Erdungsanschluss eine Steckverbindung (20) aufweist.

3. Steuergerät nach Anspruch 1 oder 2, **dadurch gekennzeichnet, dass** bei mehrpoligen Anschlüssen (26) jeweils wenigstens ein Steckplatz (31) mit einer entsprechenden Anzahl von Steckverbindungen zur Absicherung aller Anschlusspole dieses Anschlusses (26) vorgesehen ist.

4. Steuergeräte nach einem der vorhergehenden Ansprüche, **dadurch gekennzeichnet, dass** für jeden Anschluss (3, 4; 26, 27) einer elektrischen Komponente (1) wenigstens ein Steckplatz (24, 25; 28, 29; 31) für eine Überspannungsschutzvorrichtung (21, 22) mit einer entsprechenden Polzahl vorgesehen ist.

5. Steuergerät nach einem der vorhergehenden Ansprüche, **dadurch gekennzeichnet, dass** der wenigstens eine Steckplatz (24, 25; 28, 29; 31) für die Überspannungsschutzvorrichtung (21, 22) innerhalb eines abnehmbaren Gehäuses angeordnet ist.

6. Steuergerät nach einem der vorhergehenden Ansprüche, **dadurch gekennzeichnet, dass** die Anschlusspole (3, 4; 26, 27) zur Verbindung mit Versorgungs- und/oder Datenleitungen (30, 40) für außerhalb einer Gebäudehülle liegenden elektrische Komponenten (1) vorgesehen sind.

7. System bestehend aus einem Steuergerät (6) nach einem der vorhergehenden Ansprüche und wenigstens einer elektrischen Komponente (1) für den Außeneinsatz als Bestandteil einer Gebäudeautomation, **dadurch gekennzeichnet, dass** wenigstens eine Versorgungs- und/oder Datenleitung (30, 40) zwischen der elektrischen Komponente (1) und dem Steuergerät (6) vorgesehen ist, die durch eine Gebäudehülle (2) verlegt ist, wobei eine oder mehrere Überspannungsschutzvorrichtungen (21, 22) in dem wenigstens einen Steckplatz (24, 25; 28, 29; 31) eingesteckt sind, die alle Anschlusspole der elektrischen Komponente (1) absichern.

8. System nach Anspruch 7, **dadurch gekennzeichnet, dass** die elektrische Komponente eine Wetterstation (1) ist, die über eine zwei- oder mehrpolige Versorgungsleitung (30) und eine zwei- oder mehrpolige Datenleitung (40) an das Steuergerät 6) angeschlossen ist.

9. System nach Anspruch 7 oder 8, **dadurch gekennzeichnet, dass** für die Versorgungsleitung (30) und die Datenleitung 40) jeweils ein separater Überspannungsschutz 21, 22) in einem dafür vorgesehenen Steckplatz (24, 25; 28, 29; 31) angeordnet ist.

10. System nach Anspruch 7, **dadurch gekennzeichnet, dass** wenigstens eine Datenleitung durch eine Funkstrecke ersetzt ist.
